# NEUE EUROPÄISCHE PATENTSCHRIFT

(11) **EP 1 230 582 B2**
(45) Veröffentlichungstag und Bekanntmachung des Hinweises auf die Entscheidung über den Einspruch: **16.10.2013**
(45) Hinweis auf die Patenterteilung: 02.04.2003
(21) Anmeldenummer: 01967175.9
(22) Anmeldetag: 14.07.2001
(51) Int. Cl.: G03D 15/00, H04N 1/00

(54) **VERFAHREN UND VORRICHTUNG ZUR ARCHIVIERUNG UND ÜBERTRAGUNG VON BILDDATEN**
METHOD AND DEVICE FOR ARCHIVING AND TRANSMITTING IMAGE DATA
PROCÉDÉ ET DISPOSITIF POUR L'ARCHIVAGE ET LA TRANSMISSION DE DONNÉES D'IMAGE

(30) Priorität: 09.09.2000 DE 10044672
(43) Veröffentlichungstag der Anmeldung: 14.08.2002
(73) Patentinhaber: CeWe Color AG & Co. OHG, 26133 Oldenburg (DE)
(72) Erfinder: SCHMIDT-SACHT, Wulf, 26188 Edewecht (DE)
(74) Vertreter: Eisenführ, Speiser & Partner
(86) Internationale Anmeldenummer: PCT/EP2001/008144
(87) Internationale Veröffentlichungsnummer: WO 2002/021209

(56) Entgegenhaltungen:
- EP-A- 0 809 149
- EP-A- 0 860 980
- EP-A- 0 984 406
- EP-A2- 0 869 660
- JP-A- 8 044 856
- JP-A- 8 101 907
- JP-A- 08 095 163
- JP-A- 11 102 035
- US-A- 5 666 215
- PATENT ABSTRACTS OF JAPAN vol. 1995, no. 02, 31. März 1995 (1995-03-31) & JP 06 311338 A (OLYMPUS OPTICAL CO LTD), 4. November 1994 (1994-11-04)

## Beschreibung

Die Erfindung betrifft ein Verfahren zur Archivierung und Übertragung von Bilddaten eines Kunden zu einem Entwicklungslabor, wobei der Kunde an einer Eingabevorrichtung die Bilddaten eingibt und dort mindestens ein von dem Entwicklungslabor zu erstellendes Bildprodukt als Auftrag auswählt, woraus von der Eingabevorrichtung Auftragsdaten erzeugt werden. Außerdem betrifftdie Erfindung eine entsprechende Vorrichtung und einen entsprechenden Datenträger zur Archivierung und Übertragung von Bilddaten eines Kunden zu einem Entwicklungslabor.

Ein Verfahren und eine Vorrichtung zur Eingabe und Übertragung von Bilddaten eines Kunden zu einem Entwicklungslabor sind aus der DE 198 40 313 A1 bekannt. Ein Kunde kann dabei an einer bevorzugt bei einem Fotohändler aufgestellten Eingabevorrichtung seine Bilddaten in eine Eingabevorrichtung eingeben, wobei die Bilddaten auf unterschiedlichen Medien gespeichert sein können. Diese Medien können sowohl digitaler Art wie Disketten, CD's, Smart-Media-Cards oder analoger Art wie Filmnegative, Filmpositive, Diapositive sein. Diese Bilddaten werden an der Eingabevorrichtung in präsentierbare Bilddaten umgewandelt, die dem Kunden unmittelbar präsentiert werden, der danach ein oder mehrere Bildprodukte, wie z. B. Fotoabzüge einzelner Bilder, einen Fotokalender oder Fotopostkarten in Auftrag geben kann. Von der Eingabevorrichtung werden daraufhin Auftragsdaten erzeugt, die zusammen mit den Bilddaten beispielsweise über ein Telefonnetz an das Entwicklungslabor übertragen werden, das daraus die gewünschten Bildprodukte erstellt und über den Fotohändler an den Kunden liefert. Die Datenträger, auf denen die Bilddaten des Kunden gespeichert sind, brauchen somit nicht an das Entwicklungslabor zur Erstellung der Bildprodukte übermittelt werden.

Bei den immer mehr verbreiteten Digital-Fotokameras werden Bilddaten auf Speichermedien wie Smart-Media-Cards, Compact-Flash, PC-Karten u.a., gespeichert, die derzeit noch relativ teuer sind und nur einen begrenzten Speicherumfang aufweisen. Es ist deshalb nicht sinnvoll, derartige Speichermedien als Archivierungsmittel zu benutzen. Zum Auslesen der Bilddaten können Digital-Fotokameras mit einem PC gekoppelt werden, um so die Daten beispielsweise auf der Festplatte des PC zu speichern, deren Speicherumfang jedoch ebenfalls begrenzt ist. Auch an der bekannten Eingabevorrichtung können Bilddaten von solchen Speichermedien eingelesen werden, indem entweder das Speichermedium direkt eingegeben werden oder eine Kopplung mit der Digital-Fotokamera hergestellt wird. Nach dem Auslesen der Bilddaten von dem Speichermedium kann diese dann wieder neu benutzt werden, wobei darauf gespeicherte Bilddaten dann überschrieben werden.

Der Erfindung liegt die Aufgabe zugrunde, bei dem bekannten Verfahren und der bekannten Vorrichtung eine Möglichkeit zur Archivierung von Bilddaten zu schaffen.

Diese Aufgabe wird hinsichtlich des Verfahrens dadurch gelöst, dass die Bilddaten und die Auftragsdaten des Kunden nach dem Auswählen mindestens eines Bildproduktes auf einem gesonderten Datenträger gespeichert werden und dass anhand dieses zu dem Entwicklungslabor übermittelten Datenträgers das mindestens eine gewählte Bildprodukt erstellt und mit dem Datenträger an den Kunden geliefert wird.

Der Erfindung liegt dabei der Gedanke zugrunde, die Bilddaten und die Auftragsdaten eines Kunden von der Eingabevorrichtung an das Entwicklungslabor nicht online zu übermitteln, z. B. über das Telefonnetz, sondern auf einem gesonderten Datenträger zu speichern, auf dem nur die Auftragsdaten und die Bilddaten dieses einen Kunden und dieses einen Auftrages gespeichert sind. Dabei werden auf dem Datenträger nicht nur die Bilddaten gespeichert, die zur Erstellung der in Auftrag gegebenen Bildprodukte erforderlich sind, sondern es werden erfindungsgemäß alle Bilddaten auf dem Datenträger gespeichert, die von dem Kunden an der Eingabevorrichtung eingegeben wurden. Der Datenträger kann somit gleichzeitig auch als Archivierungsmittel dienen, da er nämlich zusammen mit dem von dem Entwicklungslabor erstellten Auftragsergebnis, d. h. den gewählten Bildprodukten, an den Kunden geliefert wird. Der Kunde kann diesen Datenträger dann als Archivierungsmittel aufbewahren, während er seine Datenträger, auf denen seine Bilddaten gespeichert waren, die er in die Eingabevorrichtung eingegeben hat, z. B. die Smart-Media-Card seiner Digital-Fotokamera, unmittelbar nach der Eingabe der Bilddaten in die Eingabevorrichtung löschen und neu benutzen kann.

Erfindungsgemäß wird somit ein kundenindividueller Datenträger erstellt, der gleichzeitig zur Übermittlung der Bilddaten von der Eingabevorrichtung an das Entwicklungslabor und zur Archivierung aller Bilddaten des Kunden dient.

Bevorzugt wird als Datenträger ein optischer Datenträger, insbesondere eine CD oder eine DVD verwendet. Zum Speichern der Bilddaten und der Auftragsdaten auf diesem optischen Datenträger kann in der Eingabevorrichtung eine herkömmliche und bekannte Schreibvorrichtung, z. B. ein CD- oder DVD-Brenner, verwendet werden.

In einer vorteilhaften Weiterbildung ist vorgesehen, dass der Datenträger mehrfach beschreibbar ist, insbesondere mehrfach als Datenträger für die Speicherung der Bilddaten und der Auftragsdaten verwendbar ist, wobei die bei vorherigen Speichervorgängen gespeicherten Bilddaten erhalten bleiben oder gelöscht werden können. Der Datenträger kann somit mehrfach zur Übertragung von Bilddaten von der Eingabevorrichtung an das Entwicklungslabor verwendet werden, ohne seinen Zweck als Archivierungsmittel zu verlieren, da immer mehr Bilddaten auf dem Datenträger gespeichert werden können. Ein Kunde kann somit seinen Datenträger zur Eingabevorrichtung mitbringen, um darauf neue Auftragsdaten und neue Bilddaten von anderen Datenträgern zu speichern.

In einer Weiterbildung der Erfindung ist vorgesehen, dass der Datenträger an der Eingabevorrichtung bereitgestellt wird und eine Kennung aufweist zur Verhinderung einer Speicherung von Daten auf dem Datenträger mittels nicht zugelassener Vorrichtungen, insbesondere mittels herkömmlicher Computer. Ein Kunde braucht somit keine eigenen Datenträger zur Eingabevorrichtung mitbringen. Um jedoch mißbräuchliche Benutzungen dieser Datenträger zu verhindern, ist bevorzugt vorgesehen, dass eine solche mißbräuchliche Benutzung mittels einer Kennung auf dem Datenträger verhindert wird. Dies bedeutet, dass eine Speicherung von Daten nur mittels zugelassener Eingabevorrichtungen erfolgen kann, während das Auslesen von auf dem Datenträger gespeicherten Daten überall, also auch auf dem kunden-eigenen PC, mittels einer geeigneten Lesevorrichtung möglich ist.

In einer weiteren Ausgestaltung der Erfindung ist vorgesehen, dass die Eingabevorrichtung ausgestaltet ist zur Eingabe von in unterschiedlicher Form vorliegenden Bilddaten, insbesondere in Form digitaler auf einem Datenträger wie einer Diskette, einer Smart-Media-Card, einem Compact-Flash, einer PC-Karte, einer CD, einer DVD, einer Zip-Diskette oder einem Halbleiterspeicher gespeicherter Bilddaten oder in Form analoger als Fotopositive, Fotonegative oder Diapositive gespeicherter Bilddaten ausgestaltet ist. Die Eingabevorrichtung ist somit zur Eingabe von auf allen möglichen Datenträgern gespeicherten Bilddaten vorbereitet. Außerdem ist sie auch leicht um weitere Lesevorrichtungen für zukünftige Datenträger erweiterbar.

Bevorzugt ist die Eingabevorrichtung frei zugänglich, insbesondere bei einem Fotohändler oder in einem Kaufhaus, angeordnet. Auch andere Standorte, wie beispielsweise eine Bahnhofswartehalle, ein Einkaufszentrum oder eine Drogeriefachhandlung, sind denkbar.

Alternativ kann die Eingabevorrichtung auch für den Privatgebrauch ausgestaltet sein, wobei sie auch individuell für den einzelnen Kunden zusammengestellt und nur die für den Kunden nötigen Lesevorrichtungen aufweisen kann. Die Vorrichtung kann somit beispielsweise im wesentlichen einen PC mit einer geeigneten Software umfassen, wobei der PC neben Eingabemitteln bzw. einer Lesevorrichtung zum Eingeben von Bilddaten und Datenverarbeitungsmitteln zur Erzeugung von Auftragsdaten entsprechende Speichermittel aufweist.

In einer weiteren Ausgestaltung ist vorgesehen, dass die Bilddaten und/oder die Auftragsdaten per Datenfernübertragung, insbesondere über das Internet oder eine Telefonleitung, an das Entwicklungslabor übertragen werden. Dies kann ergänzend zur Übertragung des Datenträgers an das Entwicklungslabor vorgesehen sein, um den Auftrag schneller bearbeiten zu können und die Sicherheit der Datenübertragung von der Eingabevorrichtung an das Entwicklungslabor zu erhöhen.

In einer Weiterbildung ist vorgesehen, dass eine Software zur Eingabe der Bilddaten in die Eingabevorrichtung und/oder zur Auswahl des mindestens einen Bildproduktes auf einem PC ausführbar und in diesen von einem Datenträger oder aus dem Internet geladen werden kann. Dies ist speziell gedacht für eine für den Privatgebrauch ausgestaltete, bevorzugt vereinfachte, Eingabevorrichtung, damit der Kunde auch an seinem privaten PC die Erfindung nutzen kann.

Bevorzugt kann auch vorgesehen sein, dass standardmäßig als Auftrag für jedes Bild der eingegebenen Bilddaten ein Fotoabzug auswählbar ist. Dies bedeutet, dass standardmäßig ein Fotoabzug pro Bild erzeugt wird, wenn der Benutzer keine Auswahl trifft, oder es kann eine besondere Auswahlfunktion angeboten werden, die besonders schnell und einfach eine solche Standardauswahl zulässt. Bei besonders einfachen Eingabevorrichtungen kann sogar ausschließlich eine solche Auswahlfunktion vorgesehen sein, so dass immer von allen eingegebenen Bilddaten jeweils ein Fotoabzug erstellt wird. Zusätzlich könnte jedoch der Benutzer noch auf der Verpackung, beispielsweise der Fototasche, mit der der Datenträger an das Entwicklungslabor gesandt wird, handschriftlich besondere Wünsche für seinen Auftrag vermerken, beispielsweise mehrfache Abzüge einzelner oder aller Bilder oder besondere Formatwünsche. Eine solche einfach ausgestaltete Eingabevorrichtung weist dann bevorzugt lediglich ein einfaches Display auf, mit dem der Benutzer darauf hingewiesen wird, was er als nächstes tun soll, entweder als Textnachricht oder als symbolische Darstellung.

Bei einer komfortabler ausgestalteten Vorrichtung sind jedoch Mittel vorgesehen, die eine Auswahl des mindestens einen Bildprodukts anhand einer Visualisierung der Bilddaten ermöglichen. Es können somit alle eingelesenen Bilddaten gleichzeitig, gruppenweise oder nacheinander angezeigt werden und der Benutzer kann jeweils auswählen, ob und mit welchen Sonderwünschen von den einzelnen Bildern Bildprodukte erstellt werden sollen.

Um zu verhindern, dass der Benutzer seine Bilddaten in die Eingabevorrichtung einliest und auf dem Datenträger speichert, dann aber den Datenträger nicht an das Entwicklungslabor übermittelt, sondern entwendet und als Archivierungsmittel sofort behält, ist weiter erfindungsgemäß vorgesehen, dass die Speicherung der Bilddaten auf dem Datenträger in verschlüsselter Form und/oder dass der Speichervorgang unvollständig erfolgt. Dies bedeutet, dass der Benutzer die Bilddaten von dem Datenträger nicht auslesen kann, wenn der Datenträger nicht an das Entwicklungslabor übermittelt worden ist, das die Bilddaten entschlüsselt und in entschlüsselter Form auf dem Datenträger speichert und/oder den Speichervorgang vervollständigt.

Der Speichervorgang wird bei einem optischen Datenträger insbesondere dadurch unvollständig ausgeführt, dass der Lead-Out-Bereich des optischen Datenträgers nicht bei der Speicherung der Bilddaten und Auftragsdaten in der Eingabevorrichtung, sondern erst beim Entwicklungslabor geschrieben wird. Erst danach können die Bilddaten und Auftragsdaten von dem Datenträger gelesen werden. Ein Schreiben des Lead-Out-Bereichs durch den Benutzer ist in der Regel nicht möglich, so dass der Datenträger ohne geschriebenen Lead-Out-Bereich für den Benutzer nutzlos ist. Dieses Verfahren hat außerdem den weiteren Vorteil, dass beim Übertragen der Bilddaten auf den Datenträger eine Zeitersparnis eintritt, da das Schreiben des Lead-out-Bereichs auf einen optischen Datenträger im Vergleich zu dem Übertragen der Bilddaten eine nicht unerhebliche Zeit beansprucht, die ein bis zwei Minuten lang sein kann.

Eine erfindungsgemäße Vorrichtung zur Archivierung und Übertragung von Bilddaten ist in Anspruch 13 angegeben. Die Vorrichtung kann in identischer oder ähnlicher Weise weitergebildet oder vorteilhaft ausgestaltet sein, wie dies im Zusammenhang mit dem erfindungsgemäßen Verfahren beschrieben und in den auf Anspruch 1 rückbezogenen Ansprüche angegeben ist.

Die Erfindung wird nachfolgend anhand der Zeichnungen näher erläutert. Es zeigen:
- Figur 1: ein Blockschaltbild einer erfindungsgemäßen Eingabevorrichtung;
- Figur 2: ein Blockschaltbild zur Erläuterung des erfindungsgemäßen Verfahrens; und
- Figur 3: eine vereinfachte Ausführungsform einer erfindungsgemäßen Eingabevorrichtung.

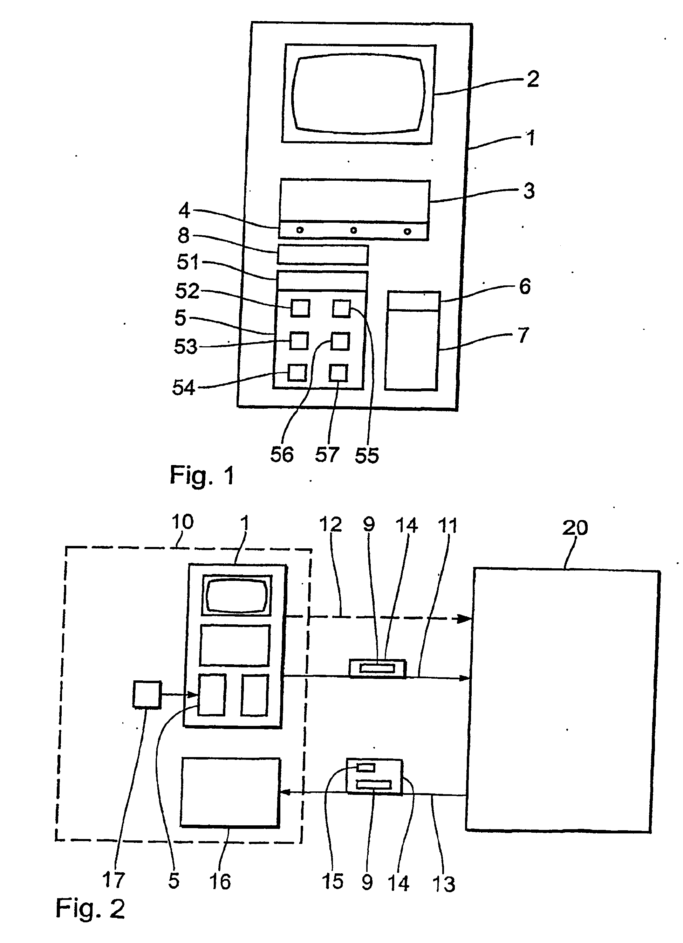

Die in Figur 1 gezeigte erfindungsgemäße Eingabevorrichtung 1 weist ein Display 2, z. B. einen herkömmlichen Monitor oder ein herkömmliches TV-Gerät, zum Anzeigen der eingegebenen Bilddaten eines Kunden sowie zum Anzeigen von Bedien- und Produktinformationen auf. Weiter weist die Eingabevorrichtung 1 Auswahlmittel 3, 4 auf, die im wesentlichen eine Tastatur 3 und einfache Bedienknöpfe 4 umfassen, womit der Kunde Daten, z. B. seine Adresse und seinen Namen eingeben und eine Auswahl von angebotenen Bildprodukten treffen kann. Hierfür kann das Display 2 auch als Touch-Screen ausgestaltet sein, so dass der Kunde direkt durch Berühren entsprechender Felder Eingaben machen oder eine Auswahl treffen kann.

Zur Eingabe von Bilddaten sind entsprechende Eingabemittel 5 vorgesehen, die für unterschiedliche Arten von Bilddaten und für unterschiedliche Bilddatenträger ausgebildet sind. Beispielhaft sind hier gezeigt ein Scanner 51 zum Einlesen von Fotoabzügen, ein Diskettenlaufwerk 52, ein Zip-Laufwerk 53, ein CD-Laufwerk 54, eine Lesevorrichtung 55 für Smart-Media-Cards, jeweils zum Lesen digitaler Bilddaten, sowie eine Lesevorrichtung 56 für Fotonegative, einen sogenannten Fotonegativ-Scanner, und eine Lesevorrichtung 57 für Diapositive. Ein Kunde kann somit ein oder mehrere Datenträger mit Bilddaten mitbringen und in die Eingabevorrichtung 1 eingeben, die die Bilddaten in entsprechende präsentierbare Bilddaten umwandelt, die nacheinander oder gleichzeitig als Miniaturbilder auf dem Display 2 angezeigt werden. Hierzu kann der Kunde durch entsprechende Bedienmenüs geführt werden, was hier nicht näher erläutert werden soll.

Weiter ist in der Eingabevorrichtung 1 ein Speichermittel 6, beispielsweise eine CD-Schreibvorrichtung, vorgesehen mit einem entsprechenden Vorratshalter 7, in dem leere und beschreibbare CD's für den Kunden vorrätig gehalten werden. Schließlich sind Datenverarbeitungsmittel 8 vorgesehen zur Verarbeitung der eingegebenen Bilddaten, insbesondere zur Umwandlung in digitale, präsentierbare Bilddaten, sowie zur Erzeugung von Auftragsdaten entsprechend der Auswahl von Bildprodukten des Kunden.

Wenn ein Kunde nun seine Bilddaten in die Eingabevorrichtung 1 eingegeben hat und mittels der Auswahlmittel 3, 4 aus seinen Bildern die entsprechenden Bildprodukte ausgewählt hat, werden von der Eingabevorrichtung selbsttätig sämtliche von dem Kunden eingegebenen Bilddaten auf einem der vorrätig gehaltenen Datenträger mittels der Schreibvorrichtung 6 gespeichert, wozu der Kunde entweder einen Datenträger aus dem Vorratshalter 7 entnehmen und in die Schreibvorrichtung 6 einlegen muß oder wobei dies automatisch erfolgt. Außerdem werden von den Datenverarbeitungsmitteln 8 Auftragsdaten erzeugt, die für das Entwicklungslabor bestimmt sind und dieses über die von dem Kunden ausgewählte Bildprodukte und die entsprechenden zugehörigen Bilddaten informiert. Diese werden ebenfalls auf demselben Datenträger wie die Bilddaten gespeichert, der schließlich an das Entwicklungslabor, beispielsweise mittels eines von dem Entwicklungslabor betriebenen Abholdienstes, übermittelt wird. Für jeden einzelnen Kunden wird somit ein gesonderter Datenträger mit dessen Bilddaten und dessen Auftragsdaten erzeugt und an das Entwicklungslabor übertragen.

Das beschriebene Verfahren soll mittels Figur 2 nochmals näher veranschaulicht werden. Dort ist die Eingabevorrichtung 1 mit den Eingabemitteln 5 bei einem Fotohändler 10 für Kunden frei zugänglich angeordnet. Ein Kunde gibt sein Bilddaten von einem oder mehreren Bilddatenträgern 17 in die Eingabevorrichtung 1 ein. Von der Eingabevorrichtung 1 gelangt der Datenträger 9 mit den Bilddaten und den Auftragsdaten des Kunden über den Übertragungsweg 11, z. B. per Post oder mittels eines Abholdienstes, zum Entwicklungslabor 20. Parallel dazu können außerdem die Bilddaten und/oder die Auftragsdaten über einen anderen Weg 12, beispielsweise über ein Telefonnetz oder über das Internet an das Entwicklungslabor gelangen, um einerseits eine schnellere Bearbeitung zu ermöglichen und andererseits auch einem Datenverlust auf dem Datenträger 9 oder einem völligen Verlust des Datenträgers 9 vorzubeugen.

Das von dem Entwicklungslabor erstellte Auftragsergebnis 15, z. B. die gewünschten Fotoabzüge, werden zusammen mit demselben Datenträger 9 und bevorzugt einem Fotoindex in einer Abholtasche 14 an den Fotohändler 10 über den Übertragungsweg 13, beispielsweise mittels desselben Abholdienstes, über den von dem Fotohändler 10 die Datenträger 9 auch an das Entwicklungslabor 20 gelangt sind, geliefert. Dort kann der Kunde seine Abholtasche 14 aus einem Abholfach 16 abholen und gegebenenfalls seine wieder neu beschriebenen Datenträger 17 in die Eingabevorrichtung 1 eingeben, um neue Bildprodukte zu bestellen. Hierzu kann der Kunde dann auch wieder denselben Bilddatenträger 9 zur Speicherung der in die Eingabevorrichtung 1 eingegebenen Bilddaten und der erzeugten Auftragsdaten verwenden. Dies kann so lange erfolgen, bis der Datenträger 9 keinen Speicherplatz mehr aufweist.

Erfindungsgemäß erfüllt der Datenträger 9 somit einen doppelten Zweck, nämlich zur Übertragung von Bilddaten von der Eingabevorrichtung 1 an das Entwicklungslabor und zur Archivierung von Bilddaten eines Kunden. Bevorzugt eignen sich hierfür beschreibbare optische Datenträger wie CD's oder DVD's, die eine sehr hohe Lebensdauer aufweisen.

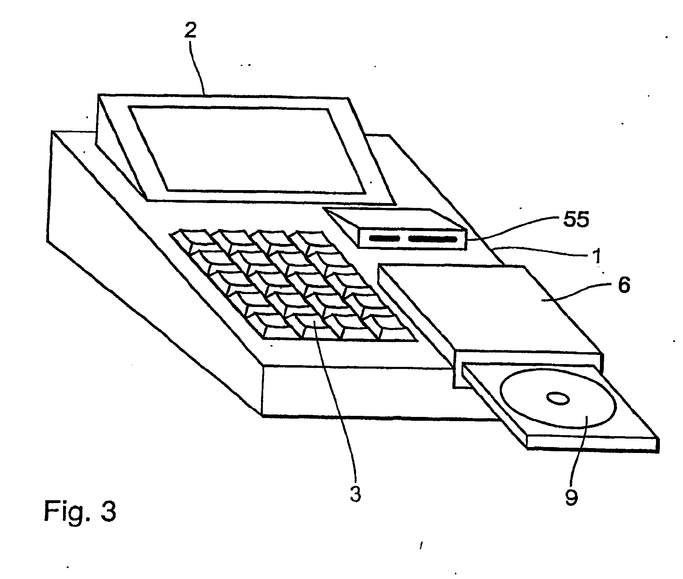

In Figur 3 ist eine vereinfachte Ausführungsform einer erfindungsgemäßen Eingabevorrichtung .1 gezeigt. Diese Ausführungsform ist als Tischgerät ausgestaltet und weist nur die für die häufigsten Anwendungsfälle erforderlichen Baugruppen auf. Dies sind neben dem Bildschirm 2, der ein einfacher LCD-Bildschirm sein kann, und den Auswahlmitteln 3, die beispielsweise im wesentlichen eine kombinierte Ziffernund Buchstabentastatur aufweisen können, eine Lesevorrichtung 55 für digitale Speichermedien wie insbesondere Smart-Media-Cards oder PC-Karten und ein CD-Brenner 6. Ein solches Tischgerät kann auch zu geringeren Kosten hergestellt werden, so dass es für einen Kunden zu einem verträglichen Preis erwerbbar und zu Hause betreibbar ist. Der Kunde, der beispielsweise eine Digital-Fotokamera besitzt und häufig benutzt, kann somit auf einfache und schnelle Weise seine Daten von der Smart-Media-Card, die er in das Laufwerk 55 eingeben kann, auf einer CD 9 speichern zur Archivierung. Gleichzeitig kann er aber auch an dem Gerät 1 die von ihm gemachten Bilder auf dem Bildschirm 2 anzeigen lassen und anhand dieser Bilder auswählen, welche Bildprodukte er von seinen Bilddaten erstellen lassen will. Die erzeugten Auftragsdaten werden dann wiederum auf der CD 9 gespeichert, die als einziges zu dem Entwicklungslabor geschickt werden muß, um die Bildprodukte zu erstellen. Die CD 9 kommt dann zusammen mit den erstellten Bildprodukten in der beschriebenen Weise direkt an den Kunden zurück.

Der Bildschirm kann auch derart einfach ausgestaltet sein, dass darauf nicht die einzelnen Bilder angezeigt werden, sondern dass nur Hinweise an den Benutzer gegeben werden, was er als nächsten Schritt zu tun hat. Bei einem solchen einfachen Gerät kann dann auch nur eine Standardauswahl vorgesehen sein, wonach für jedes einzelne Bild ein Fotoabzug erstellt wird. Der Benutzer muss bei einem solch einfachen Gerät somit lediglich seinen Datenträger mit seinen Bilddaten in die Eingabevorrichtung einführen und einen Datenträger zum Überspielen einlegen. Die Übertragung der Daten erfolgt dann selbsttätig. Nach Übertragung muss der Benutzer dann wiederum lediglich seinen mitgebrachten Datenträger entnehmen sowie den neu bespielten Datenträger entnehmen und an das Entwicklungslabor übersenden.

Vorzugsweise ist die erfindungsgemäße Eingabevorrichtung so ausgestaltet, dass aus den von einem Kunden eingegebenen Bilddaten präsentierbare, digitale Bilder erzeugt werden, die einzeln nacheinander auf dem Bildschirm angezeigt werden, wobei der Kunde bei jedem Bild entscheiden kann, ob er hiervon ein Bildprodukt wünscht oder nicht. Durch entsprechenden Tastendruck kann der Benutzer sich somit durch sämtliche Bilder hindurch "klicken". Auch zum Auswählen eines Bildprodukts ist die erfindungsgemäße Eingabevorrichtung so ausgestaltet, dass dies möglichst einfach erfolgen kann. Vorzugsweise sind hier als Auswahlmittel gesonderte Tasten vorgesehen, denen jeweils eine gesonderte Funktion für die Auswahl eines speziellen Bildprodukts zugeordnet ist. Insgesamt soll somit eine möglichst einfache Bedienung für den Benutzer gewährleistet werden.

## Patentansprüche

1. Verfahren zur Archivierung und Übertragung von Bilddaten eines Kunden zu einem Entwicklungslabor (20), wobei der Kunde an einer als Bedienterminal ausgestalteten Eingabevorrichtung (1) die auf einem ersten Datenträger (17) gespeicherten Bilddaten eingibt und dort mindestens ein von dem Entwicklungslabor (20) zu erstellendes Bildprodukt (15) als Auftrag auswählt, woraus von der Eingabevorrichtung (1) automatisch Auftragsdaten erzeugt werden, **dadurch gekennzeichnet, dass** nicht um die zur Erstellung der als Auftrag ausgewählten Bildprodukte erforderlichen, sondern sämtliche eingegebenen, auf dem ersten Datenträger gespeicherten Bilddaten und die Auftragsdaten des Kunden nach dem Auswählen des mindestens einen Bildproduktes (15) automatisch auf einem gesonderten zweiten Datenträger (9) gespeichert werden und dass anhand dieses zu dem Entwicklungslabor (20) übermittelten zweiten Datenträgers (9) das mindestens eine gewählte Bildprodukt (15) erstellt und mit dem zweiten Datenträger (9) an den Kunden geliefert wird.

2. Verfahren nach Anspruch 1,
**dadurch gekennzeichnet, dass** als Datenträger (9) ein optischer Datenträger, insbesondere eine CD oder DVD, verwendet wird.

3. Verfahren nach einem der vorhergehenden Ansprüche,
**dadurch gekennzeichnet, dass** der Datenträger (9) mehrfach beschreibbar ist, insbesondere mehrfahr als Datenträger (9) für die Speicherung der Bilddaten und der Auftragsdaten verwendbar ist, wobei die bei vorherigen Speichervorgängen gespeicherten Bilddaten erhalten bleiben oder gelöscht werden können.

4. Verfahren nach einem der vorhergehenden Ansprüche,
**dadurch gekennzeichnet, dass** der Datenträger (9) an der Eingabevorrichtung (1) bereitgestellt wird und eine Kennung aufweist zur Verhinderung einer Speicherung von Daten auf dem Datenträger (9) mittels nicht zugelassener Vorrichtungen, insbesondere mittels herkömmlicher Computer.

5. Verfahren nach einem der vorhergehenden Ansprüche,
**dadurch gekennzeichnet, dass** die Eingabevorrichtung (1) ausgestaltet ist zur Eingabe von in unterschiedlicher Form vorliegenden Bilddaten, insbesondere in Form digitaler auf einem Datenträger wie einer Diskette, einer Smart-Media-Card, einem Compact-Flash, einer PC-Karte, einer CD, einer DVD, einer Zip-Diskette oder einem Halbleiterspeicher gespeicherter Bilddaten oder in Form analoger als Fotopositive, Fotonegative oder Diapositive gespeicherter Bilddaten.

6. Verfahren nach einem der vorhergehenden Ansprüche,
**dadurch gekennzeichnet, dass** standardmäßig als Auftrag für jedes Bild der eingegebenen Bilddaten ein Fotoabzug auswählbar ist.

7. Verfahren nach einem der vorhergehenden Ansprüche,
**dadurch gekennzeichnet, dass** die Auswahl des mindestens einen Bildprodukts (15) anhand einer Visualisierung der Bilddaten an der Eingabevorrichtung erfolgt.

8. Verfahren nach einem der vorhergehenden Ansprüche,
**dadurch gekennzeichnet, dass** die Bilddaten und/oder die Auftragsdaten ergänzend per Datenfernübertragung, insbesondere über das Internet oder eine Telefonleitung, an das Entwicklungslabor (20) übertragen werden.

9. Verfahren nach einem der vorhergehenden Ansprüche,
**dadurch gekennzeichnet, dass** eine Software zur Eingabe der Bilddaten in die Eingabevorrichtung (1) und/oder zur Auswahl des mindestens einen Bildprodukts (15) auf einem PC ausführbar und in diesen von einem Datenträger oder aus dem Internet geladen werden kann.

10. Verfahren nach einem der vorhergehenden Ansprüche,
**dadurch gekennzeichnet, dass** die Speicherung der Bilddaten auf dem Datenträger in verschlüsselter Form und/oder dass der Speichervorgang unvollständig erfolgt.

11. Verfahren nach Anspruch 10,
**dadurch gekennzeichnet, dass** der Lead-Out-Bereich des optischen Datenträgers nicht bei der Speicherung der Bilddaten und Auftragsdaten in der Eingabevorrichtung, sondern erst beim Entwicklungslabor geschrieben wird.

12. Verfahren nach einem der vorhergehenden Ansprüche,
**dadurch gekennzeichnet, dass** aus den eingegebenen Bilddaten präsentierbare digitale Bilddaten erzeugt werden, die nacheinander als Bilder angezeigt werden, wobei der Kunde bei jedem Bild eine Auswahl eines Bildproduktes treffen kann.

13. Vorrichtung zur Archivierung von Bilddaten eines Kunden für die Übertragung zu einem Entwicklungslabor (20) mit Eingabemitteln (5) zum Eingeben von auf einem ersten Datenträger (17) gespeicherten Bilddaten, mit Auswahlmitteln (3, 4) zur Auswahl eines von dem Entwicklungslabor (20) im Auftrag des Kunden zu erstellenden Blidprodukts (15) und mit Datenverarbeitungsmitteln (8) zur automatischen Erzeugung von Auftragsdaten, wobei die Vorrichtung als Bedienterminal ausgestaltet ist,
**dadurch gekennzeichnet, dass** Speichermittel (6) vorgesehen sind, die im Betrieb nicht nur die zur Erstellung der als Auftrag ausgewählten Bildprodukte erforderlichen, sondern sämtliche eingegebenen, auf dem ersten Datenträger gespeicherten Bilddaten und die Auftragsdaten des Kunden nach dem Auswählen des mindestens einen Bildproduktes (15) auf einem gesonderten, zur Übermittlung an das Entwicklungslabor (20) bestimmten zweiten Datenträger (9) automatisch speichern, wobei der zweite Datenträger (9) für die Lieferung an den Kunden zusammen mit dem mindestens einen Bildprodukt (15) vorgesehen ist.

14. Vorrichtung nach Anspruch 13,
**dadurch gekennzeichnet, dass** als Datenträger (9) ein optischer Datenträger, insbesondere eine CD oder DVD, verwendet wird.

15. Vorrichtung nach einem der Ansprüche 13 bis 14,
**dadurch gekennzeichnet, dass** der Datenträger (9) mehrfach beschreibbar ist, insbesondere mehrfach als Datenträger (9) für die Speicherung der Bilddaten und der Auftragsdaten verwendbar ist, wobei die bei vorherigen Speichervorgängen gespeicherten Bilddaten erhalten bleiben oder gelöscht werden können.

16. Vorrichtung nach einem der Ansprüche 13 bis 15,
**dadurch gekennzeichnet, dass** ein Vorratshalter (7) zur Bereitstellung der Datenträger (9) an der Eingabevorrichtung (1) vorgesehen ist, wobei der Datenträger eine Kennung aufweist zur Verhinderung einer Speicherung von Daten auf dem Datenträger (9) mittels nicht zugelassener Vorrichtungen, Insbesondere mittels herkömmlicher Computer.

17. Vorrichtung nach einem der Ansprüche 13 bis 16,
**dadurch gekennzeichnet, dass** die Eingabevorrichtung (1) ausgestaltet ist zur Eingabe von in unterschiedlicher Form vorliegenden Bilddaten, insbesondere in Form digitaler auf einem Datenträger wle einer Diskette, einer Smart-Media-Card, einem Compact-Flash, einer PC-Karte, einer CD, einer DVD, einer Zip-Diskette oder einem Halbleiterspeicher gespeicherter Bliddaten oder in Form analoger als Fotopositive, Fotonegative oder Diapositive gespeicherter Bilddaten.

18. Vorrichtung nach einem der Ansprüche 13 bis 17,
**dadurch gekennzeichnet, dass** die Auswahlmittel (5) zur standardmäßigen Auswahl eines Fotoabzugs als Auftrag für jedes Bild der eingegebenen Bilddaten ausgestaltet sind.

19. Vorrichtung nach einem der Ansprüche 13 bis 18,
**dadurch gekennzeichnet, dass** ein Bildschirm (2) zur Visualisierung der eingegebenen Bilddaten vorgesehen Ist, um die Auswahl des mindestens einen Bildprodukts (15) anhand einer Visualisierung der Bilddaten zu ermöglichen.

20. Vorrichtung nach einem der Ansprüche 13 bis 19,
**dadurch gekennzeichnet, dass** Datenfernübertragungsmittel (12) zur ergänzenden Datenfernübertragung der Bilddaten und/oder der Auftragsdaten, insbesondere über das Internet oder eine Telefonleitung, an das Entwicklungslabor (20) übertragen werden.

21. Vorrichtung nach einem der Ansprüche 13 bis 20,
**dadurch gekennzeichnet, dass** die Speichermittel (6) zur Speicherung der Bilddaten auf dem Datenträger in verschlüsselter Form und/oder zum unvollständigen Abschluss des Speichervorgangs ausgestaltet sind.

22. Vorrichtung nach einem der Ansprüche 13 bis 21,
**dadurch gekennzeichnet, dass** die Datenverarbeitungsmittel (8) zur Erzeugung von präsentierbaren digitalen Bliddaten aus den eingegebenen Bliddaten und zur nacheinander erfolgenden Anzeige als Bilder ausgestaltet sind, wobei der Kunde bei jedem Bild eine Auswahl eines Bildproduktes treffen kann.

23. Vorrichtung nach einem der Ansprüche 13 bis 22,
**dadurch gekennzeichnet, dass** die Vorrichtung (1) als separates, frei zugängliches, insbesondere bei einem Fotohändler (10) oder in einem Kaufhaus aufgestelltes Bedienterminal ausgestaltet ist.

24. Vorrichtung nach einem der Ansprüche 13 bis 23,
**dadurch gekennzeichnet, dass** die Vorrichtung (1) im Wesentlichen einen PC mit einer geeigneten Software umfasst.

25. Vorrichtung nach einem der Ansprüche 13 bis 24,
**dadurch gekennzeichnet, dass** die Vorrichtung als vereinfachtes Gerät ausgestaltet ist mit einem Laufwerk (55) für digitale Speichermedien, insbesondere für Smart-Media-Cards, als Eingabemittel und mit einem CD- oder DVD-Brenner (6) als Speichermittel.

## Claims

1. Method for archiving and transmitting a customer's image data to a development laboratory (20), the customer inputting the image data stored on a first data carrier (17) on an input device (1) configured as a control terminal and selecting there at least one image product (15), which is to be created by the development laboratory (20), as a job, from which job data are automatically generated by the input device (1),
**characterized in that** not only the image data required for creating the image products selected as a job, but rather all image data stored on the first data carrier that have been input and the job data of the customer are automatically stored on a separate, second data carrier (9) after the selection of the at least one image product (15), and **in that** the at least one selected image product (15) is created using the said second data carrier (9), which is conveyed to the development laboratory (20), and is supplied to the customer with the second data carrier (9).

2. Method according to Claim 1,
**characterized in that** an optical data carrier, in particular a CD or DVD, is used as the data carrier (9).

3. Method according to one of the preceding claims, **characterized in that** the data carrier (9) is a write-many data carrier, in particular can be used a number of times as data carrier (9) for storing the image data and the job data, in which case the image data stored during previous storage operations can be preserved or erased.

4. Method according to one of the preceding claims, **characterized in that** the data carrier (9) is provided at the input device (1) and has an identifier for preventing storage of data on the data carrier (9) by means of non-authorized devices, in particular by means of conventional computers.

5. Method according to one of the preceding claims, **characterized in that** the input device (1) is configured for the inputting of image data present in different forms, in particular in the form of digital image data stored on a data carrier such as a floppy disk, a smart media card, a compact flash, a PC card, a CD, a DVD, a zip floppy disk or a semiconductor memory, or in the form of analogue image data stored as photopositives, photonegatives, or transparencies.

6. Method according to one of the preceding claims, **characterized in that** a photo-print can be selected as standard as a job for each image of the image data input.

7. Method according to one of the preceding claims, **characterized in that** the at least one image product (15) is selected on the basis of a visualization of the image data on the input device.

8. Method according to one of the preceding claims, **characterized in that** the image data and/or the job data are supplementarily transmitted to the development laboratory (20) by remote data transmission, in particular via the Internet or a telephone line.

9. Method according to one of the preceding claims,
**characterized in that** a software for Inputting the image data into the input device (1) and/or for selecting the at least one image product (15) can be executed on a PC and can be loaded into the latter from a data carrier or from the Internet.

10. Method according to one of the preceding claims,
**characterized in that** the image data axe stored on the data carrier in encrypted form, and/or **in that** the storage operation is effected incompletely.

11. Method according to Claim 10,
**characterized in that** the lead-out area of the optical data carrier is not written during the storage of the image data and job data in the input device, but rather only at the development laboratory.

12. Method according to one of the preceding claims,
**characterized in that** presentable digital image data are generated from the image data input and are displayed successively as images, in which case the customer can make a selection of an image product for each image.

13. Device for archiving a customer's image data for transmission to a development laboratory (20) having input means (5) for inputting image data stored on a first data carrier (17), having selection means (3, 4) for selecting an image product (15), which is to be created by the development laboratory (20) by order of the customer, and having data processing means (8) for automatically generating job data, wherein the device is configured as a control terminal,
**characterized in that** storage means (6) are provided which, during operation, automatically store not only the image data required for creating the image products selected as a job, but rather all image data stored on the first data carrier that have been input and the job data of the customer after the selection of the at least one image product (15) on a separate, second data carrier (9), which is intended to be conveyed to the development laboratory (20), the second data carrier (9) being provided for delivery to the customer together with the at least one image product (15).

14. Device according to Claim 13,
**characterized in that** an optical data carrier, in particular a CD or DVD, is used as the data carrier (9) .

15. Device according to one of Claims 13 to 14,
**characterized in that** the data carrier (9) is a write-many data carrier, in particular can be used a number of times as data carrier (9) for storing the image data and the job data, in which case the image data stored during previous storage operations can be preserved or erased.

16. Device according to one of Claims 13 to 15,
**characterized in that** provision is made of a stock holder (7) for providing the data carriers (9) at the input device (1), the data carrier having an identifier for preventing storage of data on the data carrier (9) by means of non-authorized devices, in particular by means of conventional computers.

17. Device according to one of Claims 13 to 16,
**characterized in that** the input device (1) is configured for the inputting of image data present in different forms, in particular in the form of digital image data stored on a data carrier such as a floppy disk, a smart media card, a compact flash, a PC card, a CD, a DVD, a zip floppy disk or a semiconductor memory, or in the form of analogue image data stored as photopositives, photonegatives, or transparencies.

18. Device according to one of Claims 13 to 17,
**characterized in that** the selection means (5) are configured for the selection as standard of a photo-print as a job for each image of the image data input.

19. Device according to one of Claims 13 to 18,
**characterized in that** provision is made of a screen (2) for the visualization of the image data input, in order to make it possible to select the at least one image product (15) on the basis of a visualization of the image data.

20. Device according to one of Claims 13 to 19,
**characterized in that** remote data transmission means (12) for the supplementary remote data transmission of the image data and/or of the job data are transmitted to the development laboratory (20), in particular via the Internet or a telephone line.

21. Device according to one of Claims 13 to 20,
**characterized in that** the storage means (6) are configured for storing the image data on the data carrier in encrypted form and/or for incomplete conclusion of the storage operation.

22. Device according to one of Claims 13 to 21,
**characterized in that** the data processing means (8) are configured for generating presentable digital image data from the image data input and for successively effected display as images, in which case the customer can make a selection of an image product for each image.

23. Device according to one of Claims 13 to 22,
**characterized in that** the device (1) is configured as a separate, freely accessible operating terminal set up in particular on the premises of a photographic dealer (10) or in a department store.

24. Device according to one of Claims 13 to 23,
**characterized in that** the device (1) essentially comprises a PC with a suitable software.

25. Device according to one of Claims 13 to 24,
**characterized in that** the device is configured as a simplified unit with a drive (55) for digital storage media, in particular for smart media cards, as input means and with a CD or DVD burner (6) as storage means.

## Revendications

1. Procédé pour l'archivage et la transmission de données d'image d'un client vers un laboratoire de développement (20), selon lequel le client entre les données d'image enregistrées sur un premier support de données dans un dispositif d'entrée (1) aménagé en terminal utilisateur et y sélectionne au moins un produit d'image (15) qui sera fabriqué par le laboratoire de développement (20) comme commande, à partir de quoi des données de commande sont automatiquement produites par le dispositif d'entrée (1),
**caractérisé en ce que** non seulement les données d'image entrées qui sont nécessaires pour la réalisation de travaux photographiques choisis en tant que commande mais encore l'ensemble des données d'image qui sont enregistrées sur le premier support de données et les données de commande du client sont automatiquement enregistrées après la sélection d'au moins un produit d'image (15) sur un deuxième support de données particulier (9) et **en ce que**, à l'aide de ce deuxième support de données (9) transmis par le laboratoire de développement (20) l'un des produits d'image sélectionné (15), est fabriqué et livré au client avec le deuxième support de données (9).

2. Procédé selon la revendication 1,
**caractérisé en ce que**, en tant que support de données (9), sont utilisés en particulier un CD ou un DVD.

3. Procédé selon l'une des revendications précédentes,
**caractérisé en ce que** le support de données (9) peut être inscriptible plusieurs fois, en particulier peut être utilisé plusieurs fois comme support de données (9) pour le stockage de données d'image et de données de commande, moyennant quoi les données d'image enregistrées lors des opérations d'enregistrement précédentes peuvent rester présentes ou être supprimées.

4. Procédé selon l'une des revendications précédentes,
**caractérisé en ce que** le support de données (9) est mis à disposition auprès du dispositif d'entrée (1) et présente un indicatif d'identification pour empêcher un enregistrement de données sur le support de données (9) au moyen d'appareils non autorisés, en particulier au moyen d'ordinateurs traditionnels.

5. Procédé selon l'une des revendications précédentes,
**caractérisé en ce que** le dispositif d'entrée (1) est conçu pour l'entrée de données d'image présentes sous différentes formes, en particulier sous forme de données d'images numériques enregistrées sur un support de données tel qu'une disquette, une carte Smartmédia, un Compact-Flash, une carte PC, un CD, un DVD, une disquette Zip ou une mémoire à semi-conducteur ou sous la forme de données d'image analogiques enregistrées comme photographies, négatifs ou diapositives.

6. Procédé selon l'une des revendications précédentes,
**caractérisé en ce qu'**on peut sélectionner une épreuve photo de façon standard comme commande pour chaque image des données d'image entrées.

7. Procédé selon l'une des revendications précédentes,
**caractérisé en ce que** la sélection d'au moins un produit d'image (15) s'effectue auprès du dispositif d'entrée à l'aide d'une visualisation des données d'image.

8. Procédé selon l'une des revendications précédentes,
**caractérisé en ce que** les données d'image et/ou les données de commande sont en complément transmises par transmission de données à distance, en particulier par Internet ou ligne téléphonique au laboratoire de développement (20).

9. Procédé selon l'une des revendications précédentes,
**caractérisé en ce qu'**un logiciel pour l'entrée des données d'image dans le dispositif d'entré (1) et/ou pour la sélection d'au moins un produit d'images (15) peut être exécuter sur un PC et être chargé dans celui-ci à partir d'un support de données ou d'Internet.

10. Procédé selon l'une des revendications précédentes,
**caractérisé en ce que** l'enregistrement des données d'image sur le support de données s'effectue sous forme codée et/ou **en ce que** l'opération d'enregistrement s'effectue de manière incomplète.

11. Procédé selon la revendication 10,
**caractérisé en ce que** la zone lead-out du support de données optique n'est pas inscrite lors de l'enregistrement des données d'images et des données de commande dans le dispositif d'entrée, mais seulement au laboratoire de développement.

12. Procédé selon l'une des revendications précédentes,
**caractérisé en ce qu'**à partir des données d'images entrées sont produites des données d'images numériques présentables qui s'affichent les unes après les autres comme images, où le client peut choisir pour chaque image parmi une sélection de produits d'images.

13. Dispositif pour l'archivage de données d'images d'un client pour la transmission vers un laboratoire de développement (20) avec des moyens d'entrées (5) pour entrer des données d'images enregistrées sur un premier support de données (17), avec des moyens de sélection (3, 4) pour sélectionner un produit d'images (15) qui sera fabriqué par le laboratoire de développement (20) à la commande du client et avec des moyens de transformation de données (8) pour la production automatique de données de commande,
dans lequel le dispositif est aménagé en terminal utilisateur, **caractérisé en ce que** des moyens d'enregistrement (6) sont prévus, qui enregistrent automatiquement les données d'images en fonctionnement, non seulement celles qui sont nécessaires pour la réalisation de travaux photographiques choisis en tant que commande mais encore l'ensemble des données d'image entrées, enregistrées sur le premier support de données et les données de commande du client après la sélection d'au moins un produit d'images (15) sur un deuxième support de données (9) particulier, déterminé pour la transmission au laboratoire de développement (20), moyennant quoi le deuxième support de données (9) est prévu pour la livraison au client en même temps qu'au moins un produit d'images (15).

14. Dispositif selon la revendication 13,
**caractérisé en ce que** comme support de données (9) est utilisé un support de données optique, en particulier un CD ou un DVD.

15. Dispositif selon l'une des revendications 13 à 14, **caractérisé en ce que** le support de données (9) peut être inscriptible plusieurs fois comme support de données (9) pour l'enregistrement de données d'images et de données de commande, moyennant quoi les données d'image enregistrées lors des opérations d'enregistrement précédentes restent présentes ou sont effacées.

16. Dispositif selon l'une des revendications 13 à 15, **caractérisé en ce qu'**un support de stockage (7) est prévu pour la mise à disposition des supports de données (9) auprès du dispositif d'entrée (1), moyennant quoi le support de données présente un code pour empêcher l'enregistrement de données sur le support de données (9) au moyen d'appareils non autorisés, en particulier au moyen d'ordinateurs traditionnels.

17. Dispositif selon l'une des revendications 13 à 16, **caractérisé en ce que** le dispositif d'entrée (1) est conçu pour l'entrée de données d'image présentes sous différentes formes, en particulier sous forme de données d'images numériques enregistrées sur un support de données tel qu'une disquette, une carte Smartmédia, un Compact-Flash, une carte PC, un CD, un DVD, une disquette Zip ou une mémoire à semi-conducteur ou sous la forme de données d'image analogiques enregistrées comme photographies, négatifs ou diapositives.

18. Dispositif selon l'une des revendications 13 à 17, **caractérisé en ce que** les moyens de sélection (5) sont conçus pour la sélection standard d'une épreuve photo comme commande pour chaque image des données d'images entrées.

19. Dispositif selon l'une des revendications 13 à 18, **caractérisé en ce qu'**un écran (2) est prévu pour la visualisation des données d'images entrées, pour permettre la sélection d'au moins un produit d'images (15) à l'aide d'une visualisation des données d'images.

20. Dispositif selon l'une des revendications 13 à 19, **caractérisé en ce que** des moyens de transmissions de données à distance (12) sont transmis pour la transmission complémentaire de données à distance des données d'images et/ou des données de commande, en particulier par Internet ou une ligne téléphonique, au laboratoire de développement (20).

21. Dispositif selon l'une des revendications 13 à 20, **caractérisé en ce que** les moyens d'enregistrement (6) sont conçus pour l'enregistrement des données d'images sur le support de données sous une forme codée et/ou une opération incomplète du processus d'enregistrement.

22. Dispositif selon l'une des revendications 13 à 21, **caractérisé en ce que** les moyens de transformation de données (8) sont conçus pour la production de données d'images numériques présentables à partir des données d'images entrées et pour l'affichage successif des images, au cours duquel le client peut choisir pour chaque image parmi une sélection de produit d'images.

23. Dispositif selon l'une des revendications 13 à 22, **caractérisé en ce que** le dispositif (1) est conçu comme terminal individuel, à libre accès, en particulier chez un photographe (10) ou dans un grand magasin.

24. Dispositif selon l'une des revendications 13 à 23, **caractérisé en ce que** le dispositif (1) comprend principalement un PC avec un logiciel approprié.

25. Dispositif selon l'une des revendications 13 à 24, **caractérisé en ce que** le dispositif est conçu comme appareil simplifié avec un lecteur (55) pour des unités de stockage numériques, en particulier pour les cartes SmartMédia, comme moyens d'entrée et avec un graveur CD ou DVD (6) comme moyens d'enregistrement.
